# EUROPEAN PATENT SPECIFICATION

(11) **EP 1 004 476 B1**
(45) Date of publication and mention of the grant of the patent: **02.03.2005**
(21) Application number: 99203966.9
(22) Date of filing: 25.11.1999
(51) Int. Cl.: B60R 9/10, B60R 9/12

(54) **A transport device for fitting to the roof of a motor vehicule**
Transportvorrichtung auf dem Dach eines Kraftfahrzeugs
Dispositif de transport sur le toit d'un véhicule

(30) Priority: 26.11.1998 IT TO980995
(43) Date of publication of application: 31.05.2000
(73) Proprietor: FIAT AUTO S.p.A., 10135 Torino (IT)
(72) Inventor: Caso, Gianfranco, 10078 Venaria Reale (Torino) (IT); Leone, Silvia, 10125 Torino (IT)
(74) Representative: Fioravanti, Corrado

(56) References cited:
- DE-A- 19 543 218
- US-A- 4 826 061
- US-A- 5 305 936
- US-A- 5 579 972

## Description

The present invention relates to a transport device for fitting to the roof of a motor vehicle for carrying one or more skis and/or one or more bicycles. The invention also relates to a combined ski-carrier and bicycle rack to be fixed on the roof of a motor vehicle.

Ski carriers are known in the prior art which comprise a support element in the form of a transverse bar which extends from one side to the other of the roof and on which several arms which act to fix one or more skis, aligned longitudinally across the roof of the vehicle, are mounted for rotation in a transverse vertical plane.

While ski carriers of the aforesaid type are both efficient and of elegant design, bicycle racks currently on the market are clumsy objects which are difficult to assemble.

The object of the present invention is to provide a multifunctional transport device combining the roles of ski carriers and bicycle rack.

A further object of the present invention is to provide a compact device, which is both easy to use and of an elegant design.

According to a first aspect of the present invention, these objects are achieved by a device having the characteristics claimed in Claim 1.

According to another aspect of the present invention, these aims are achieved by a unit having the characteristics claimed in Claim 9.

Other important characteristics are claimed in the dependent Claims.

Further characteristics and advantages of the invention will become more apparent from the detailed description of one embodiment thereof, given with reference to the appended drawings, provided by way of purely non-limitative example, in which:
Figures 1, 2 and 3 are a perspective view, a view from above and a front elevation view respectively, which illustrate schematically a bicycle and a series of skis carried on the roof of a motor vehicle by means of two ski/bicycle transport units, each having a pair of devices according to the present invention;
Figure 4 is a view from above of a motor vehicle fitted with a pair of ski/bicycle transport units according to the invention, in a configuration for carrying a bicycle, which is not shown for the sake of simplicity;
Figure 5 shows a detail of Figure 4 on an enlarged scale; and
Figure 6 is an exploded perspective view of some components of the transport device of the invention.

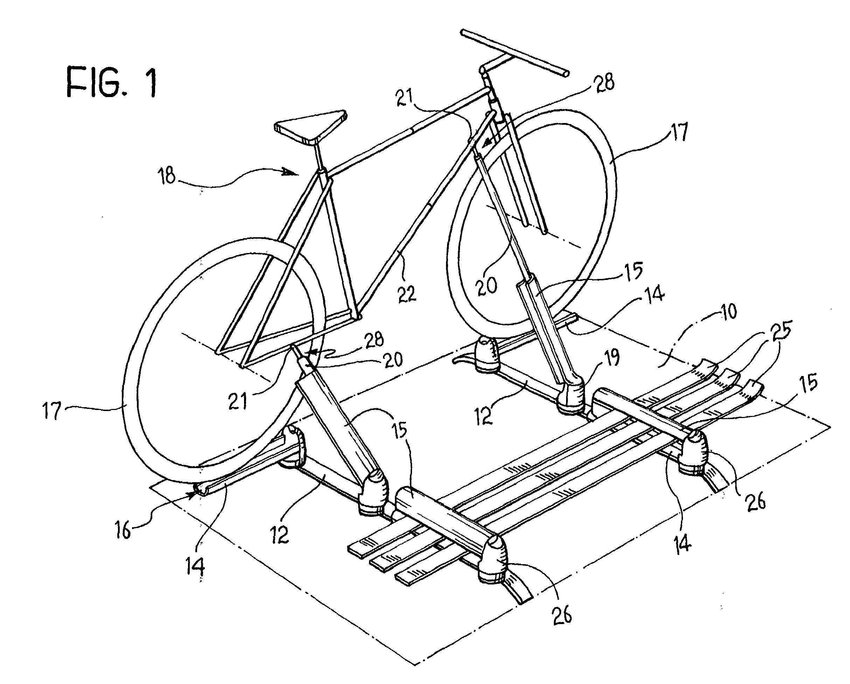

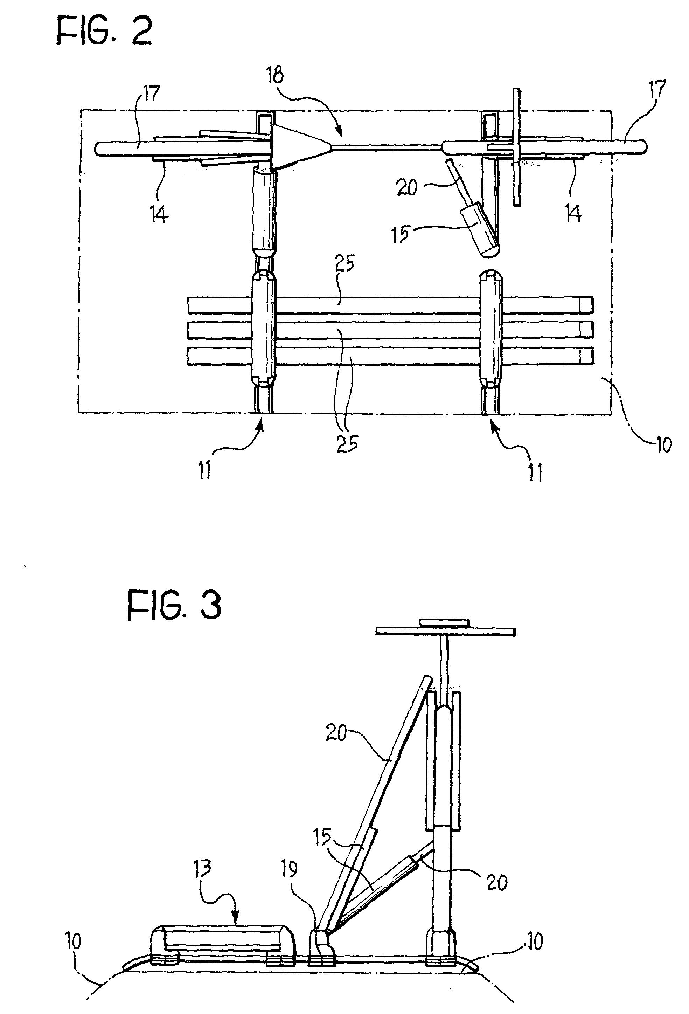

With reference initially to Figures 1 to 3, the roof of a motor vehicle is schematically indicated 10, with two ski/bicycle transport units according to the present invention, each generally indicated 11, fixed thereon in longitudinally spaced positions.

Each unit 11 includes a transverse bar 12 as the support element fixed to the roof 10 of the motor vehicle, which element, in this embodiment, is of a type removably fixed by its ends to the sides of the roof 10. It is clear, however, that the bars 12 could alternatively be elements of a different type, for example in form of bars or plates secured by magnets in continuous manner or otherwise across the roof of the vehicle.

In the preferred embodiment shown in the drawings, a pair of transport devices, each generally indicated 13, are mounted alongside each other along each bar 12.

According to the present invention, each transport device 13 comprises a bearing arm 14, mounted for rotation about a substantially vertical axis in an outer or side position with respect to the roof 10, and a locking arm 15, mounted for rotation about a horizontal axis, in an inner or central position with respect to the roof 10.

In the preferred embodiment, each of the locking arms 15 is also mounted so that it is also able to turn about a substantially vertical axis.

With reference to Figure 1 in particular, the bearing arms 14 form upwardly concave channel-shape seats 16; as shown in the upper left-hand portion of Figure 1, each seat 16 able to support a respective wheel 17 of a bicycle 18 when the bearing arms 14 are set in a longitudinal direction. The locking arms 15, on the other hand, are turned to a raised position, in order to lock the bicycle 18 and hold it in a vertical position, as will be explained in further detail herein after.

Each locking arm 15 is secured to an associated bar 12, for example by means of an articulation element 19 or other securing element permitting the movements stated above and, again according to the invention, has a rigid rectilinear element 20 mounted in extendable manner with respect to the associated bar 15 and bears a fastening element 21 on its free end, for example a clamp or hook which can be fixed to the bicycle 18, preferably to the frame 22 thereof.

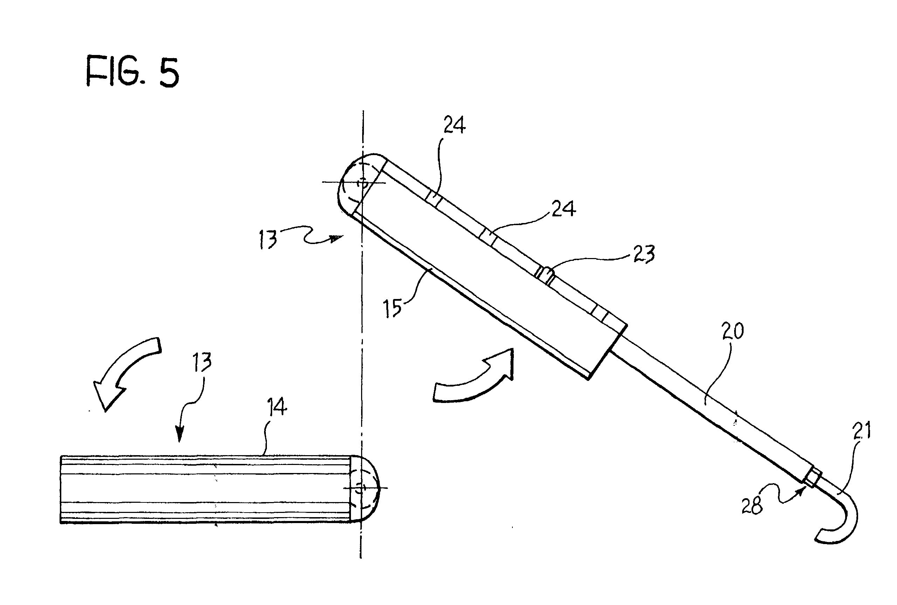

In the illustrated locking position, the position of the extendable element 20 must be fixed in order to hold the bicycle 18 in a stable vertical position and to prevent it from swaying sideways or moving lengthways, especially when the vehicle is moving. The extendable element 20 therefore has appropriate locking means (Figure 5) such as transverse pins 23, resiliently hinged to engage selectively, in the extended position shown, one of a plurality of holes 24 constituting locking seats formed in the arm 15 for fixing the relative position between it and its extendable element 20. Advantageously, several holes or engagement seats 24 are formed in the arms 15, in order to be able to adapt the position of the element 20, when extended, to the dimensions of the bicycle 18 to be carried. In the example of figure 5, the extendable element 20 slides like a telescope within the arm 15.

With reference again to Figure 1, the position of the fastening means 21 relative to the arm 15 or to the fixed point constituted by the pivot 19 can preferably be finely adjusted, so as to match the dimensions of the bicycle to be carried and to prevent any play or relative motion between the bicycle and the support structure thereof, for example by providing a threaded adjustment device 28 at the free end of the extendable element 20.

The support arms 14 for the wheels 17 have appropriate locking means (not shown) for releasably fixing their orientation relative to the transverse bars 12, these may be snap engagement or other fixing means operable to lock them in the correct position: that is longitudinal for transporting a bicycle and transverse for transporting skis, as shown in Figure 1.

With reference now to the lower right-hand portion of Figure 1, in which the two transport devices 13 are used to carry three skis 25, the two lower bearing arms 14 are rotated so as to be parallel to and over of the transverse bars 12; the upper locking arms 15 are lowered, parallel to and over of the bearing arms 14 so as to clamp and lock the skis 25 in a per se known configuration of prior art ski racks. Horizontal, rotating blocks, indicated 26 are provided for pivoting the bearing arms 14 and could have a lock (not shown for the sake of simplicity) operable securely to close the locking arms 15 in the same way as for ski racks of known kind.

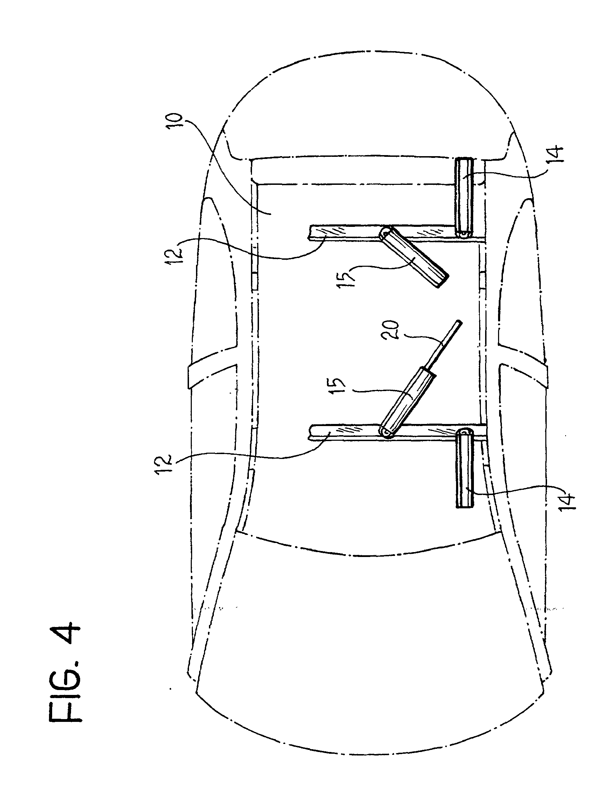

Despite the fact that the drawings show a configuration in which only one of the two locking arms 15 is used to hold the bicycle 18 in a vertical position, it is preferable to use both arms in order to prevent the bicycle from moving longitudinally; to this end, the two locking arms 15 will preferably be oriented so as to be outwardly convergent, as shown schematically in Figure 4, with their extendable elements 20 and associated fastening means appropriately secured to the bicycle. In other words, the fastening means 21 should be fixed to the bicycle 18 at an intermediate position between the transverse bars 12, in such a way that at least one of the arms 15 and its associated extendable element 20 locks the bicycle 18 like a tie rod according to whether the vehicle is decelerating or accelerating and thus whether the bicycle is subjected to a force of inertia tending to move it forwards or backwards.

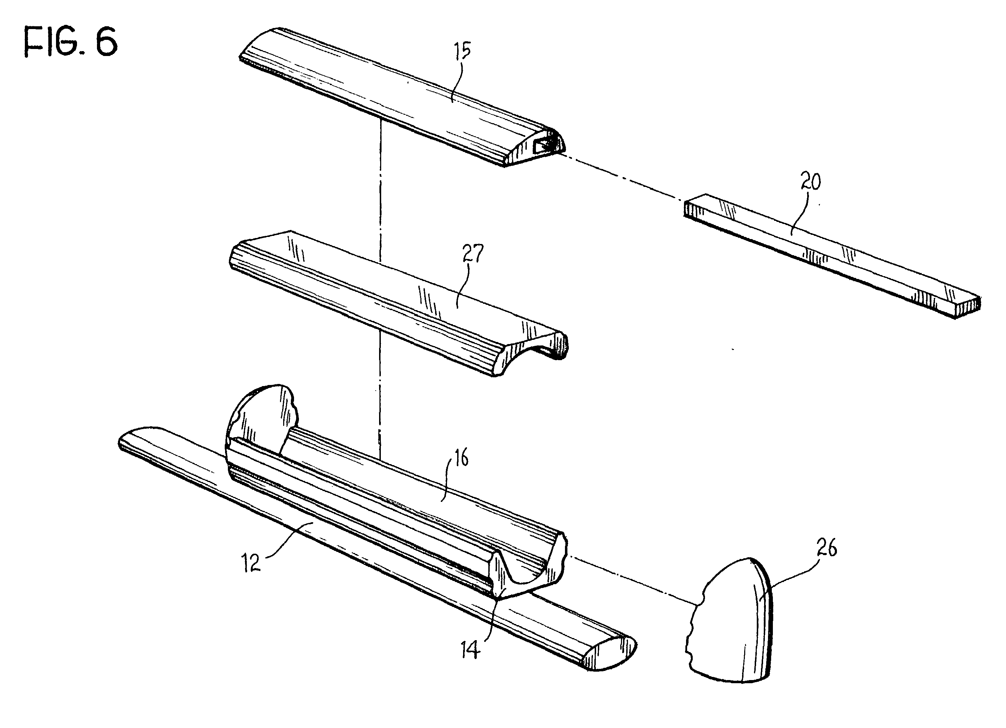

With reference, finally, to Figure 6, in one preferred embodiment the locking arm 15 and the bearing arms 14 are both made of a light, rigid material, such as extruded aluminium. The channel-shape seat 16 in the bearing arms 14 is preferably formed of rubber or other resiliently flexible material moulded onto the said arm while, in the same way, a further rubber element 27 is preferably moulded onto the lower surface of the locking arm 15, in order to grip the skis 25 resiliently when the devices 13 are used for this purpose.

## Claims

1. A transport device for fitting to the roof of a motor vehicle, **characterised in that** it includes:
- a first bearing arm (14) rotatable about a substantially vertical axis between a first longitudinal position, which provides a seat (16) for the wheel (17) of a bicycle, and a second transverse position which provides support beneath at least one ski (25); and
- a second locking arm (15) rotatable about a substantially longitudinal axis between a first, raised position for holding the bicycle (18) in a vertical position and a second, horizontal position in which the said second arm (15) lies on top of the first arm (14) clamping at least one ski (25) between the two arms; a rigid rectilinear element (20) being mounted on the said second arm (15) so as to be extendable, with fastening means (21) operable to engage removably with the bicycle (18) so as to hold it in the said vertical position
wherein both the said first arm (14) and second arm (15) are fixable to a same transverse support element (12) which is fixable to the roof (10) of a motor vehicle; the first bearing arm (14) being mounted in an outer or side position with respect to the roof (10), and the second locking arm (15) being mounted in an inner or central position with respect to the roof (10).

2. A device according to Claim 1, **characterised in that** the said second arm (15) is also rotatable about a vertical axis.

3. A device according to Claim 1, **characterised in that** the said seat (16) for supporting the wheel (17) of a bicycle is formed as an upwardly open channel, the said channel being defined by side walls of a resiliently yieldable material.

4. A device according to Claim 1, **characterised in that** the said second arm (15) has an element (27) of resiliently yieldable material on its lower surface.

5. A device according to Claim 1, **characterised in that** the said support element (12) is a support bar which extends transversely from one side of the roof (10) to the other.

6. A device according to Claim 1, **characterised in that** the said extendable rigid element (20) has adjustment means (28) for fine adjustment of the position of the said fastening means (21) with respect to the said second arm (15).

7. A device according to Claim 1, **characterised in that** the said second arm (15) and the said extendable element (20) have locking means (23) and seats (24) respectively whereby they can be selectively fixed to each other in a position selected from among a plurality of fixed positions.

8. A ski/bicycle transport unit which includes a transverse support bar (12) fixable to the roof (10) of a motor vehicle, **characterised in that** it includes at least one transport device (13) according to any one of the preceding Claims.

9. A unit according to Claim 8, **characterised in that** it includes a plurality of transport devices (13) according to any one of Claims 1 to 7.

## Patentansprüche

1. Transportvorrichtung zur Anbringung auf dem Dach eines Kraftfahrzeugs, **dadurch gekennzeichnet, dass** es umfasst:
- einen ersten Tragarm (14), der um eine im wesentlichen vertikale Achse zwischen einer ersten Längsposition, die einen Sitz (16) für das Rad (17) eines Fahrrads bereitstellt, und einer zweiten Querposition, die eine Unterlage für mindestens einen Ski (25) bereitstellt, schwenken kann; und
- einen zweiten verankerungsarm (15), der um eine im wesentlichen längsgerichtete Achse zwischen einer ersten, angehobenen Position zum Halten des Fahrrads (18) in vertikaler Stellung und einer zweiten, horizontalen Position, in der der zweite Arm (15) auf dem ersten Arm (14) aufliegt und so zumindest einen Ski (25) zwischen zwei Armen festklemmt, schwenken kann; ein starres, geradliniges Element (20), das so am zweiten Arm (15) befestigt ist, dass es verlängerbar ist, mit Haltemitteln (21), die dazu dienen, eine trennbare Verbindung mit dem Fahrrad (18) herzustellen, um es in der vertikalen Stellung zu halten;
wobei sowohl der erste Arm (14) wie der zweite Arm (15) am selben Querträgerelement (12) befestigt werden können, das am Dach (10) eines Kraftfahrzeugs befestigt werden kann, wobei der erste Tragarm (14) in einer äußeren oder Seitenposition bezüglich des Daches (10) montiert ist, und der zweite Verankerungsarm (15) in einer inneren oder mittleren Position bezüglich des Daches (10) montiert ist.

2. Vorrichtung nach Anspruch 1, **dadurch gekennzeichnet, dass** der zweite Arm (15) ebenfalls um eine vertikale Achse schwenkbar ist.

3. Vorrichtung nach Anspruch 1, **dadurch gekennzeichnet, dass** der Sitz (16) zur Unterstützung des Rades (17) eines Fahrrads als nach oben offener Kanal ausgebildet ist, wobei der Kanal von Seitenwänden aus einem elastisch nachgebenden Material begrenzt wird.

4. Vorrichtung nach Anspruch 1, **dadurch gekennzeichnet, dass** der zweite Arm (15) auf seiner Unterseite ein Element (27) aus elastisch nachgebendem Material besitzt.

5. Vorrichtung nach Anspruch 1, **dadurch gekennzeichnet, dass** das Trägerelement (12) eine Trägerstange ist, die sich quer von einer Seite des Daches (10) zur anderen erstreckt.

6. Vorrichtung nach Anspruch 1, **dadurch gekennzeichnet, dass** das verlängerbare starre Element (20) Einstellmittel (28) zur Feineinstellung der Position der Haltemittel (21) mit Bezug auf den zweiten Arm (15) besitzt.

7. Vorrichtung nach Anspruch 1, **dadurch gekennzeichnet, dass** der zweite Arm (15) und das verlängerbare Element (20) Verriegelungsmittel (23) bzw. Sitze (24) besitzen, mit denen sie wahlweise in einer aus einer Mehrzahl fester Stellungen ausgewählten Position aneinander befestigt werden können.

8. Ski-/Fahrradtransporteinheit, die einen Querträgerbalken (12) aufweist, der am Dach (10) eines Kraftfahrzeugs befestigt werden kann, **dadurch gekennzeichnet, dass** sie mindestens eine Transportvorrichtung (13) gemäß einem der vorangehenden Ansprüche besitzt.

9. Einheit nach Anspruch 8, **dadurch gekennzeichnet, dass** sie eine Mehrzahl von Transportvorrichtungen (13) gemäß einem der Ansprüche 1 bis 7 besitzt.

## Revendications

1. Dispositif de transport destiné à être fixé sur le toit d'un véhicule à moteur, **caractérisé en ce qu'**il comprend :
un premier bras d'appui (14) pouvant tourner autour d'un axe sensiblement vertical entre une première position longitudinale, qui propose un siège (16) pour la roue (17) d'une bicyclette, et une seconde position transversale qui propose le support au moins sous un ski (25) ; et
un second bras de verrouillage (15) pouvant tourner autour d'un axe sensiblement longitudinal entre une première position relevée pour maintenir la bicyclette (18) dans une position verticale, et une seconde position horizontale dans laquelle ledit second bras (15) se trouve sur la partie supérieure du premier bras (14) bloquant au moins un ski (25) entre les deux bras ; un élément rectiligne rigide (20) étant monté sur ledit second bras (15) afin d'être extensible, avec des moyens de fixation (21) pouvant fonctionner pour se mettre en prise de manière amovible avec la bicyclette (18) afin de la maintenir dans ladite position verticale ;
dans lequel ledit premier bras (14) ainsi que ledit second bras (15) peuvent être fixés sur un même élément de support transversal (12) qui peut être fixé sur le toit (10) d'un véhicule à moteur ; le premier bras d'appui (14) étant monté dans une position externe ou latérale par rapport au toit (10), et le second bras de verrouillage (15) étant monté dans une position centrale ou interne par rapport au toit (10).

2. Dispositif selon la revendication 1, **caractérisé en ce que** ledit second bras (15) peut également tourner autour d'un axe vertical.

3. Dispositif selon la revendication 1, **caractérisé en ce que** ledit siège (16) pour supporter la roue (17) d'une bicyclette est formé comme un canal ouvert vers le haut, ledit canal étant défini par des parois latérales d'un matériau élastiquement déformable.

4. Dispositif selon la revendication 1, **caractérisé en ce que** ledit second bras (15) possède un élément (27) en matériau élastiquement déformable sur sa surface inférieure.

5. Dispositif selon la revendication 1, **caractérisé en ce que** ledit élément de support (12) est une barre de support qui s'étend transversalement d'un côté du toit (10) à l'autre.

6. Dispositif selon la revendication 1, **caractérisé en ce que** ledit élément extensible rigide (20) possède des moyens de réglage (28) pour le réglage fin de la position desdits moyens de fixation (21) par rapport audit second bras (15).

7. Dispositif selon la revendication 1, **caractérisé en ce que** ledit second bras (15) et ledit élément extensible (20) possèdent des moyens de verrouillage (23) et des sièges (24) respectivement, moyennant quoi ils peuvent être sélectivement fixés entre eux dans une position sélectionnée parmi une pluralité de positions fixes.

8. Unité de transport de ski/bicyclette qui comprend une barre de support transversale (12) pouvant être fixée sur le toit (10) d'un véhicule à moteur, **caractérisée en ce qu'**elle comprend au moins un dispositif de transport (13) selon l'une quelconque des revendications précédentes.

9. Unité selon la revendication 8, **caractérisée en ce qu'**elle comprend une pluralité de dispositifs de transport (13) selon l'une quelconque des revendications 1 à 7.
